Europäisches Patentamt

European Patent Office

Office européen des brevets

(11) Publication number: **0 317 018**
**A2**

## (12) EUROPEAN PATENT APPLICATION

(21) Application number: 88202549.7

(22) Date of filing: 15.11.88

(51) Int. Cl.⁴: **H04N 11/00**

(30) Priority: **17.11.87 US 122148**

(43) Date of publication of application:
**24.05.89 Bulletin 89/21**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Cavallerano, Alan Peter**
**c/o INT. OCTROOIBUREAU B.V. Prof.**
**Holstlaan 6**
**NL-5656 AA Eindhoven(NL)**
Inventor: **Tsinberg, Mikhail**
**c/o INT. OCTROOIBUREAU B.V. Prof.**
**Holstlaan 6**
**NL-5656 AA Eindhoven(NL)**
Inventor: **Wittig, Karl**
**c/o INT. OCTROOIBUREAU B.V. Prof.**
**Holstlaan 6**
**NL-5656 AA Eindhoven(NL)**

(74) Representative: **Steenken, Jacob Eduard et al**
**INTERNATIONAAL OCTROOIBUREAU B.V.**
**Prof. Holstlaan 6**
**NL-5656 AA Eindhoven(NL)**

(54) **High definition NTSC compatible television system with increased horizontal bandwidth and reduced colour artifacts.**

(57) A system for generating high definition television signals. An augmentation signal is provided for supporting the transmission of additional panel information, increasing the aspect of an NTSC compatible main television signal component. Line differential information, as well as high frequency luminance and high frequency chrominance are transmitted in the augmentation signal super line time interval without frequency interleaving components. The high definition augmentation signal is derived by subsampling the high definition image produced by an HDTV source along the diagonal direction of its two dimensional frequency spectrum. The horizontal frequency bandwidth of the HDTV image is preserved without an objectionable loss of resolution to the human visual system.

FIG. 4

# High definition NTSC compatible television system with increased horizontal bandwidth and reduced colour artifacts.

## Field of the Invention

The present invention pertains to high definition, wide aspect ratio television systems which transmit a main NTSC compatible component, and an auxiliary signal for increasing the aspect ratio and horizontal bandwidth of the NTSC compatible signal. Such a high definition television system has been described in US-A 4,694,338 (PHA 21.323).

## Description of Related Art

The present invention is a further development in the techniques directed to providing HDTV NTSC compatible television signals, along with an augmentation enhancement signal. The augmentation signal includes additional information for extending the width of an NTSC compatible signal. Horizontal and vertical resolution is also increased by transmitting a line differential signal, and a high frequency chrominance and luminance component.

In a non-prepublished US patent application, Serial No. 084,968, filed August 13, 1984 (PHA 21.394), Extended Horizontal Resolution of Luminance and Chrominance in a High Definition Television System, there is described a technique for increasing the aspect ratio of a standard NTSC compatible video signal, as well as improving temporal and vertical detail with a line differential signal. Additionally, there is a high frequency luminance and chrominance enhancement signal transmitted during a line interval of the augmentation signal. The augmentation signal is organized on the basis of a standard line length wherein panel information, line differential, as well as the high frequency luminance and chrominance information is transmitted.

The foregoing technique employs a separation of the high frequency luminance and high frequency chrominan ce in the form of Ih and Qh signal components from the original HDTV source. The HDTV source can be an RGB, 525 line progressive, 59.94 Hz, 16:9 aspect ratio source, having 16.8 MHz of horizontal bandwidth. The chrominance components Ih and Qh were alternated between lines such that only one component, Ih or Qh, was transmitted for a selected line. Additionally, the enhancement chrominance components were frequency interleaved with the luminance signal Yh, permitting the transmission of these components simultaneously during a dedicated portion of the augmentation signal line time.

The problems associated with interleaving, common to NTSC interleaved video, were also present with the augmentation signal scheme. The difficulty in separating frequency interleaved signals, such as to avoid cross-over from one signal to the other, is present in demodulating this augmentation signal. The cross-colour and colour artifacts which are encountered in the system is a limitation on the ultimate quality of the reconstituted high resolution video signal.

Additionally, some loss of vertical and temporal resolution is encountered when the chrominance components Ih and Qh are transmitted on an alternate line basis rather than having both components of a single line transmitted.

The present invention is directed to preserving the horizontal and vertical resolution of both the luminance and chrominance spectrums of a high definition television signal. The augmentation signal includes the panel information, as well as other digital data such as stereophonic audio, a training signal, as well as high frequency enhancement luminance and chrominance information.

## Summary of the Invention

It is an object of the invention to provide an augmentation signal for an HDTV television system.

It is a specific object of this invention to provide an augmentation signal in a high definition television system which increases the aspect ratio, horizontal and vertical bandwidth of a standard video image without frequency interleaving signal components.

These and other objects are provided by a system which generates an augmentation signal occurring during a super line interval which, in a preferred embodiment, is twice the standard NTSC line interval. The system supports the transmission of an augmentation signal having additional panel information for increasing the aspect ratio of an NTSC compatible main television component. Line differential information, as well as high frequency luminance and high frequency chrominance are transmitted in the super line interval without frequency interleaving. The high definition augmentation signal is derived by subsampling the high definition image produced by an HDTV source along the diagonal direction of tis two dimensional frequency spectrum. This process is tailored to take advantage of the human visual system response, which is less sensitive to diagonal spatial frequencies than purely horizontal or vertical spatial frequencies.

In a preferred embodiment of the invention, the enhancement high frequency luminance and chrominance signals are derived by a process of filtering and decimating the input video signal source.

A high pass filter is employed which will pass the video line signal components having a bandwidth greater than that which is normally supported by an NTSC bandwidth. The high pass filter signal is vertically decimated such that only one of a plurality of vertical lines for each frame is transmitted as a high frequency enhancement signal. Both the luminance and chrominance components of this decimated signal are produced.

The decimated high frequency luminance signal Yh and high frequency chroma components Ih and Qh are each transmitted in their own individual time slots in the super line time of the augmentation signal. By suitable delays, it is possible to locate the individual high frequency luma, high frequency chrominance and quadrature modulated line differential signals in individual time slots, avoiding any frequency interleaving.

Line differential signals for alternate lines of the high definition television source are transmitted during a distinct dedicated portion of the super line augmentation signal. In a preferred embodiment of the invention, the line differential signals are quadrature modulated on a subcarrier, and the modulated subcarrier signal is transmitted in a portion of the augmentation signal line interval.

The augmentation super line transmission period includes a dedicated portion for transmitting left and right panels of alternate lines of a wide aspect picture. Digital stereophonic audio, as well as a training signal, can be transmitted during the super line interval.

The foregoing augmentation signal occupies a bandwidth of six MHz lying in a bandwidth defined by the high frequency luminance and chrominance enhancement signal. The line differential signal may be frequency centred within this bandwidth, using an appropriate subcarrier frequency. Thus, the augmentation signal includes a plurality of frequency compatible signals which occur in a different time slot, and require the bandwidth of a standard television frequency channel.

In accordance with a first broad aspect of the invention, there is provided a system for generating a high definition television augmentation line signal comprising:
a source of high definition television signals;
an encoder for producing sequential scanned lines of luminance and related chrominance signals from said high definition television signals;
a high pass filter means connected to receive said sequential scanned luminance signal, and related chrominance signals;
vertical decimation means connected to said high pass filter for selecting on a periodic basis one of a plurality of said scanned lines of luminance and related chrominance signals, whereby a high frequency enhancement signal is produced;
means for producing left and right panel signal information for increasing the aspect ratio of a low definition video image from said high definition television signals;
means for producing a decimated line differential signal from said lines of related luminance signals, and modulating said line differential signal on a subcarrier; and
means for sequentially combining in a time frame of a fixed duration said modulated line differential signal, said left and right panel signal information and said high frequency enhancement signal, whereby an augmentation line signal is produced.

In accordance with a second broad aspect of the invention, there is provided a system for improving the horizontal resolution of an HDTV television signal comprising:
a high pass filter for providing a high frequency enhancement signal from an HDTV television signal;
means for decimating said high frequency enhancement signal to produce a decimated enhancement signal;
means for separating said enhancement signal into luminance and chrominance signals; and
means for transmitting said luminance and chrominance signals in a time frame of said HDTV television signal.

In accordance with a third broad aspect of the invention, there is provided in a system for transmitting HDTV augmentation signals, wherein a time frame is generated representing lines of picture information, including left and right panel information, line differential information, high frequency luminance information and high frequency chrominance information, a decoding apparatus comprising:
a demodulator circuit for separating said augmentation signal from a transmission carrier;
a vertical interpolator for creating vertical lines of high frequency luminance and high frequency chrominance from said time frame high frequency luminance and chrominance information;
means for demodulating line differential information contained in said time frame;
means for combining said high frequency interpolated luminance with said line differential signal to provide an enhanced luminance signal; and

means for combining said enhanced luminance signal with a standard NTSC luminance signal, and said enhanced chrominance signal with a standard NTSC chrominance signal, whereby an HDTV video signal is produced.

Brief Description of the Figures

Figure 1 illustrates the two dimensional luminance and chrominance frequency spectras of a high definition RGB video signal which can be achieved at the receiver with embodiments of the instant invention.

Figure 2 illustrates the signal frequency spectras of an HD-MAC-60 high definition video signal which can be achieved at the receiver with embodiments of the instant invention.

Figure 3 shows the apparatus for forming an augmentation signal in accordance with one embodiment of the invention.

Figure 4 illustrates the augmentation signal super line timing budget.

Figure 5 illustrates the frequency spectrum occupied by the components in the augmentation signal.

Figure 6 illustrates an encoder for encoding RGB high definition signal source information into an augmentation signal.

Figure 7 illustrates a demodulating technique for the encoded signal of Figure 4 and for combining an augmentation channel signal with a main channel signal to produce a high definition television signal.

Description of the Preferred Embodiment

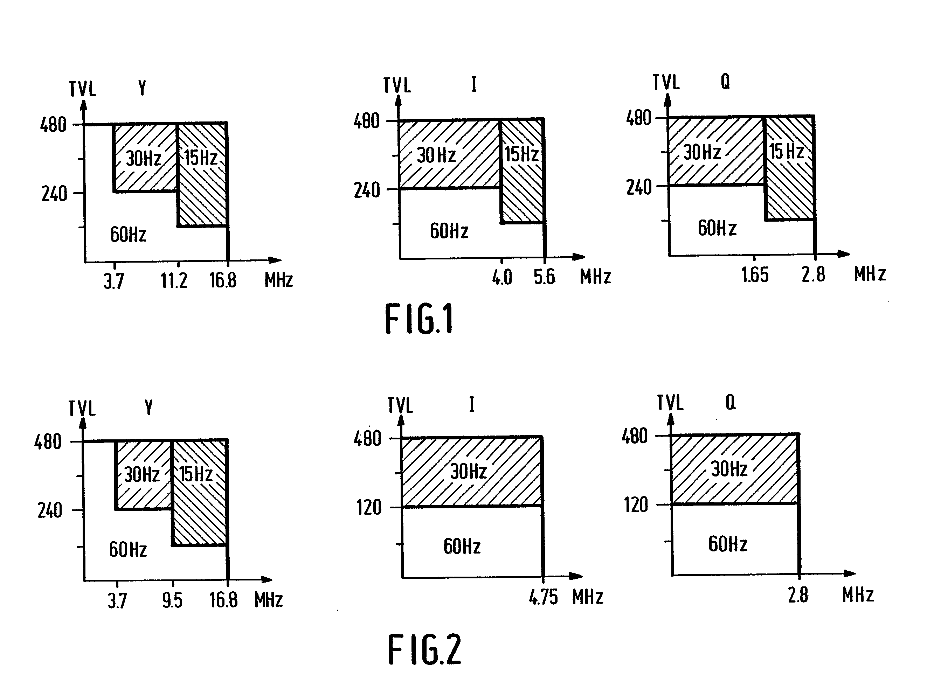

Referring now to Figures 1 and 2, there is shown a two dimensional frequency spectrum for luminance Y and chrominance 1, Q signals produced from progressive high definition television sources. In Figure 1 there is the spectrum from an RGB 525 line progressive, 59.94 Hz, 16-9 aspect ratio signal having a 16.8 MHz horizontal band width. For convenience, the frame rate may be considered 60 Hz and subsequent reference will therefore be made to 60 Hz.

The illustration of Figure 1 shows the relationship between frame rate, vertical resolution in TV lines (TVL) and horizontal resolution in MHz. For a frame rate of 60.0 Hz, 480 vertical lines are supported to a bandwidth of 3.7 MHz. Between 11.2 and 16.8 MHz of horizontal bandwidth, 120 lines of vertical resolution are supported at 60 Hz. Utilizing the interlaced nature of the compatible system, it is possible to support more than 240 lines of vertical definition at a frame update rate of 30 Hz. Interlacing requires two full frames of a video signal to transmit horizontal bandwidth between 3.7 and 11.2 MHz.

For those high frequency horizontal details which are transmitted between 11.2 and 16.8 MHz, it is possible to support more than 120 lines of vertical resolution, using a decimation scheme such that an effective frame rate of 15 Hz is derived. By decimating the vertical information, transmitted between 11,2 and 16.8 MHz on a quarter line basis, i.e., only 1/4 of the lines of a total frame are transmitted, in four frames,representing a 15 Hz frame rate, this information may be reconstituted, using motion compensation and buffer memory.

Thus, in viewing the two-dimensional luminance Y spectrum of Figure 1, a line differential encoding supports 480 TVL vertical 60 Hz, up to 3.7 MHz horizontal. For that portion of the frequency spectrum between 3.7 and 11.2 MHz, interlacing supports 240-480 TVL vertically at 30 Hz. A technique for decimating on a 4 to 1 basis the vertical line information supports horizontal bandwidths between 11.2 and 16.8 MHz on a 15 Hz frame rate.

As can be seen from Figure 1, the chrominance I spectrum and chrominance Q spectrum may be similarly encoded. For the I spectrum two hundred forty lines and more of vertical line resolution may be supported up to 4 MHz at a 30 Hz rate. Decimating each of the video lines at 1/4 the total line count will permit a full 480 lines of vertical resolution to be supported between 4 and 5.6 MHz at a 15 Hz rate. Thus, it will take four frames to complete the transmission of high frequency horizontal detail between 4 and 5.6 MHz using an appropriate vertical decimation scheme. Similar bandwidths are shown for the chrominance Q spectrum, wherein it is possible to support higher horizontal and vertical bandwidths. Buffer memory and motion detection may be used to improve the temporal updates, or different pre- and post filters with appropriate decimation sequences may be used. The effect of breaking the horizontal bandwidth up into discrete intervals, the first of which representing standard NTSC video, and a second which is high frequency line information supported at a 15 Hz frame rate, is to subsample the video signal along a diagonal extending from the vertical TVL axis to the highest horizontal frequency 16.8 MHz. As the eye is less sensitive to changes which occur along the diagonal represented by the two-dimensional spectrum diagrams of Figure 1, this detail may be subsampled spatially and temporally.

Figure 2 similarly represents the two-dimensional spectrum for an HD-MAC-60 source feed. The HD-MAC-60 provides a two-dimensional luminance Y spectrum which is nearly identical to the RGB source feed. Additionally, the chrominance I and Q spectrum are similar, occupying essentially the same horizontal bandwidth.

Using the foregoing described techniques of line differential encoding and vertical decimation, it is possible to support the HD-MAC-60 signal in the same way, using the same apparatus as is provided with the present invention.

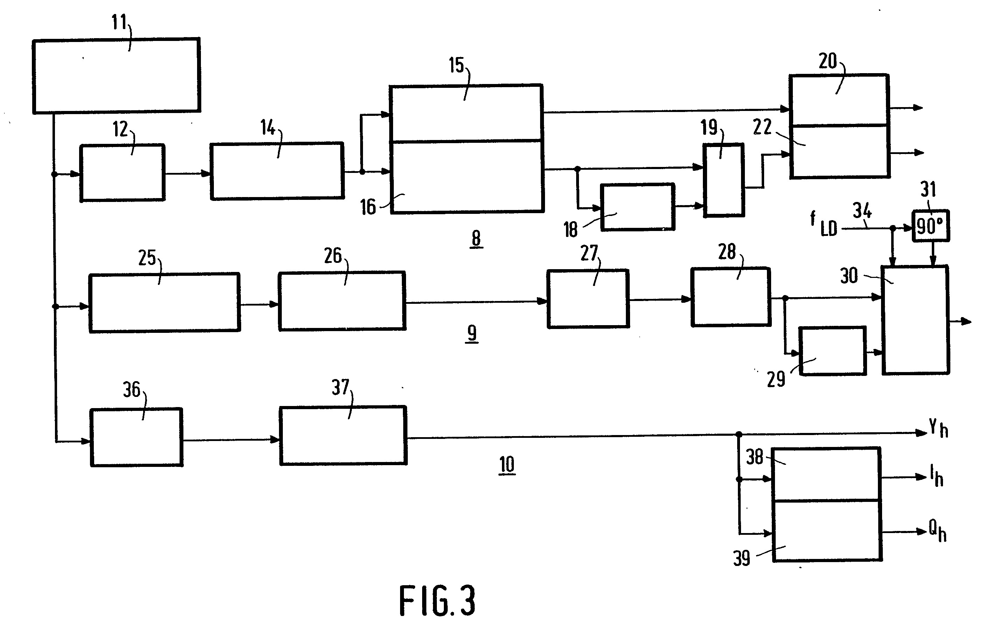

The generation of an augmentation signal and associated NTSC compatible main signal is illustrated in Figure 3. Using a wideband sequential source, such as the foregoing RGB progressive scan system, the video signal is supplied to three separate signal processing paths.

The sequential wideband source 11 video signal is divided into three paths, 8, 9 and 10. Path 8 generates an NTSC centre signal which, when received by conventional television receivers, displays a conventional NTSC image. Additionally, NTSC left and right panels are generated which will provide a wide aspect ratio picture. The left and right panels are stitched with the NTSC centre main singal to provide the wider aspect ratio signal. The NTSC centre main signal has an active line time of 52 microseconds, and the respective NTSC left and right panels occupy a total of 17.3 microseconds. Slightly more time in the panel time budget may be provided to allow for panel overlap as described in the related applications.

The main signal path 8 generates the NTSC centre main signal and the NTSC left and right panels which are stitched to the main signal to provide the wide aspect ratio signal. The technique for deriving this NTSC compatible signal is the same as that proposed in the earlier high definition television transmission system. A low pass filter 12 has an upper band stop frequency of approximately 3.7 MHz. The active line time for the sequential wide band source video signal is decimated in a 2:1 relationship by vertical decimation circuit 14. The decimated signal is applied to a centre extractor 15 and a panel extractor 16. Under control of the television studio, it is possible to extract a main component and two side panels. The main component will be a signal suitable for an NTSC standard broadcast. Conventional NTSC television receivers will display the centre signal in the conventional format without notice to a viewer.

The left and right panels which are stitched to the main signal by HDTV television receivers occupy a time duration of 6.5 microseconds and any panel overlap time. Using a one line delay 18, right and left panels of two consecutive decimated lines are available to multiplexer 19. The signals input to multiplexer 19 represent left and right panels for these consecutive decimated lines.

Time expanders 20, 22 are employed to expand the centre NTSC compatible component and to expand each of the NTSC panels at a 3:8 time expansion to a duration for efficiently using the time allotted for a line of the augmentation signal. The line of the augmentation signal is referred to as the super line, as it occupies the same amount of time as two horizontal lines of the NTSC standard signal.

The signal path 9 generates a line differential signal. The line differential signal is produced for each line generated by line differential generator 25. The line differential signal occurs in a 26 microsecond interval, corresponding to the active line time for the video signal from source 11. The line differential signal LD is the difference between the luminance component of a current line being received, and $\frac{1}{2}$ the sum of the preceding and following line of active video signal luminance. This line differential signal supports during the lower bandwidth portion of the horizontal frequencies, a high vertical resolution of up to 480 lines at 60 Hz.

The line differential signals are decimated in a vertical decimation circuit 26. By decimation it is implied that only a fractional number of the total available lines are passed. In the vertical decimation circuit 26, this occurs on an alternate, 2:1 line basis. The alternate lines are applied to a low pass filter 27. Low pass filter 27 is configured to pass all signals having a horizontal bandwidth of up to 11.2 MHz.

A time expansion circuit 28 is shown to expand the line differential signal to occupy a portion of a total line time for the augmentation signal. The expansion of 3:4 takes advantage of the additional time budgeted in the augmentation channel line signal, as will be apparent when the time frame for this signal is discussed.

The line differential signal is applied to a quadrature modulator 30. Quadrature modulator 30 receives a subcarrier signal v = $f_{LD}$; at 34, comprising a subcarrier centred at 14 MHz. This subcarrier frequency occurs in approximately the middle of the band allocated to the enhanced high frequency luminance signal Yh and chrominance signals Ih and Qh. A 90° phase shift 31 is provided for one of the carrier signals applied to quadrature modulator 30.

A one delay 29 is provided such that two consecutive lines of vertically decimated LD signals enter the quadrature modulator 30. A modulated signal including modulation components which are two consecutive even number line differential signals is produced symmetrically centred about a subcarrier. Due to the decimation circuit 26 and line delay 29, pairs of line differential signals are quadrature modulated on the subcarrier $f_{LD}$, at 34.

The high frequency enhancement signal, comprising a luminance Yh and two chrominance Ih and Qh components, is provided by signal path 10. A high pass filter 36 is configured to have a lower stop band limit at 11.2 MHz. This will process horizontal detail in the 11.2 to 16.8 MHz region.

Vertical decimation is also employed by vertical decimation circuit 37 in signal path 10. By vertically decimating at a 4:1 ratio, every fourth line of video signal received from the high pass filter 36 is transmitted. The vertical resolution greater than 120 lines per frame may be intentionally prefiltered, or other decimation schemes allowed for motion compensation memory at the receiver. The chrominance information associated with each line produced by the vertical decimation scheme is also simultaneously produced. Time compression is employed in compressors 38 and 39 to time compress each of the chrominance components Ih and Qh at a 3:1 and 6:1 time compression, respectively.

The vertical decimation circuit 37 is employed so that for each frame, decimation begins at the subsequent line from a previous frame. Thus, it is clear that after four frames have been received, each line of the sequential wide band signal from source 11 has been received after filtering through high pass filter 36 as an enhancement signal.

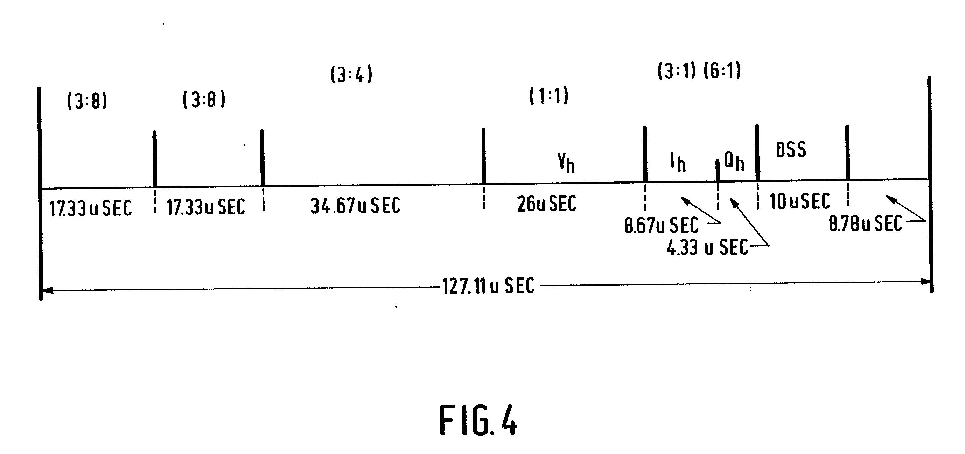

As is shown in Figure 4, each of the components to be transmitted as an augmentation signal component has a unique time budget associated with it. This unique time budget has been selected such that all the components can be assembled in a super line packet, having a duration of 127.11 microseconds. The particular time budget allotted to each component is not critical to the implementation of the invention, however, selecting a time frame of two standard NTSC lines may simplify hardware implementation.

In Figure 4, there is shown the time frame which comprises an augmentation time channel super line. The time frame includes the budgeted time slots for each signal component of the augmentation channel. The first includes the left and right panels to be stitched with a line of NTSC standard video signal. The second time slot includes the panel associated with an alternate line. As only alternate lines are transmitted for the NTSC centre main channel, the first and second time slots include all the panel information for two consecutive lines of the transmitted NTSC centre signal.

A quadrature modulated line differential signal occupies the third time slot for a duration of 34.7 microseconds. The high frequency luma Yh and high frequency chrominance components Ih and Qh follow. The augmentation super line provides time for the digital stereo signal as well as for a vertical training signal. The vertical interval training signal (VITS) may include information such as a phase reference for the line differential subcarrier

$f_{LD}$, the colour subcarrier for the NTSC left and right panels and main component, and a level for adjusting the gain level in the receiving decoder. In addition, the pan and scan, and pointer information for stitching together the side panels and main panel may be sent during this interval. Additionally, although not shown specifically in the augmentation channel super line timing budget, packet fades are provided between time slots to avoid the consequences of a sudden data change. Packet fades are standard techniques for minimizing the impact of transitions between time slots. In addition, a clamping interval is shown for the augmentation channel super line to establish DC levels for the receiving decoding circuitry.

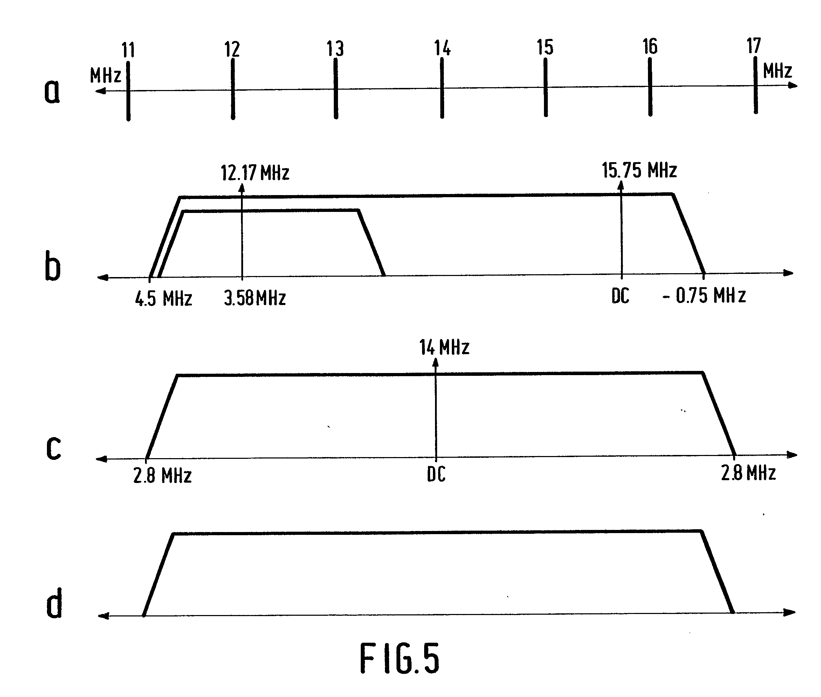

The frequency spectrum occupied by the augmentation channel is illustrated more particularly in Figure 5. Figure 5 shows at a) a frequency pass band beginning at 11 MHz and ending at 17 MHz. This corresponds to the enhanced luminance and chrominance signal produced by signal path 10 of Figure 3. The remaining components produced for the augmentation signal are frequency converted so as to lie within this pass band. The expanded quadrature modulated line difference signals shown at c) are modulated on a subcarrier of 14 MHz, and therefore lie within the required pass band. Additionally, the compressed NTSC left and right panels shown at b), which are time multiplexed, are VSB modulated on a 15.75 MHz subcarrier. The upper sideband of this modulation process is partially suppressed to form the VSB signal, leaving the lower sideband which lies in the required pass band of 11 to 17 MHz.

Finally, at d), the high frequency enhancement component comprising Yh, Ih and Qh which are time multiplexed in accordance with the time frame illustrated in Figure 4, also lie between 11 and 17 MHz. Thus, all of the required augmentation signal components are established in the appropriate 6 MHz bandwidth, without resorting to frequency interleaving which would necessarily produce objectionable artifacts and the usual problems of separating interleaved frequency signals.

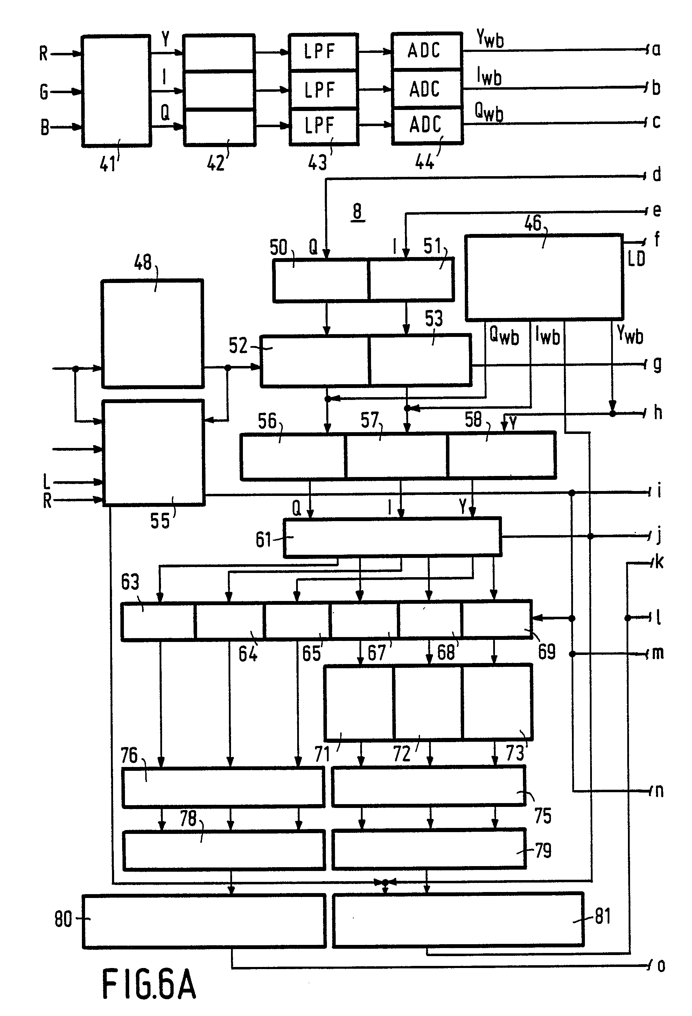

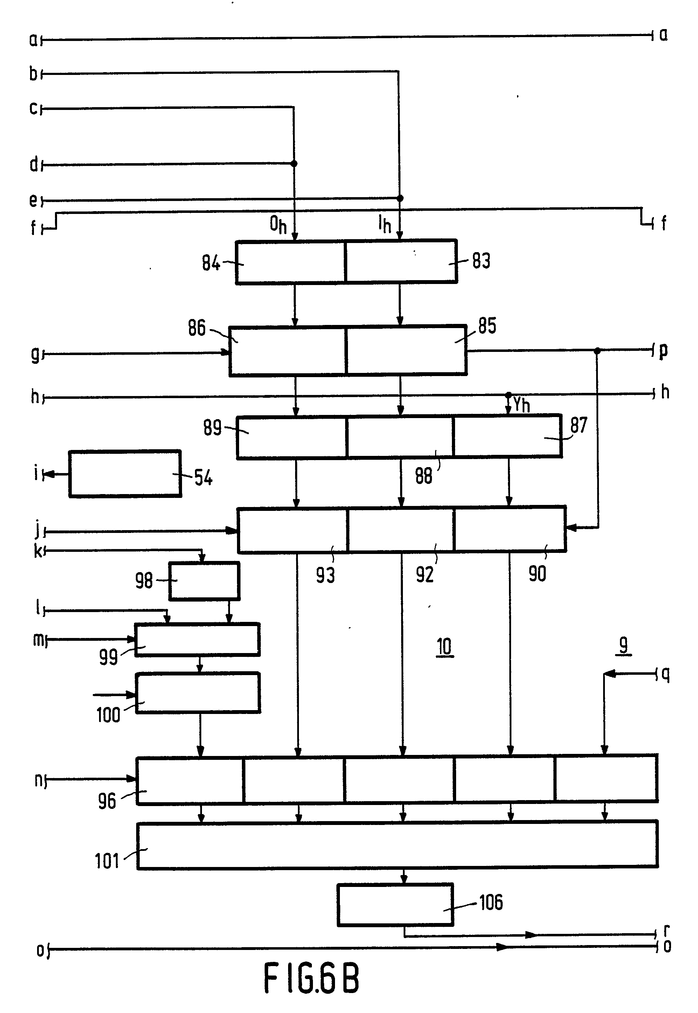

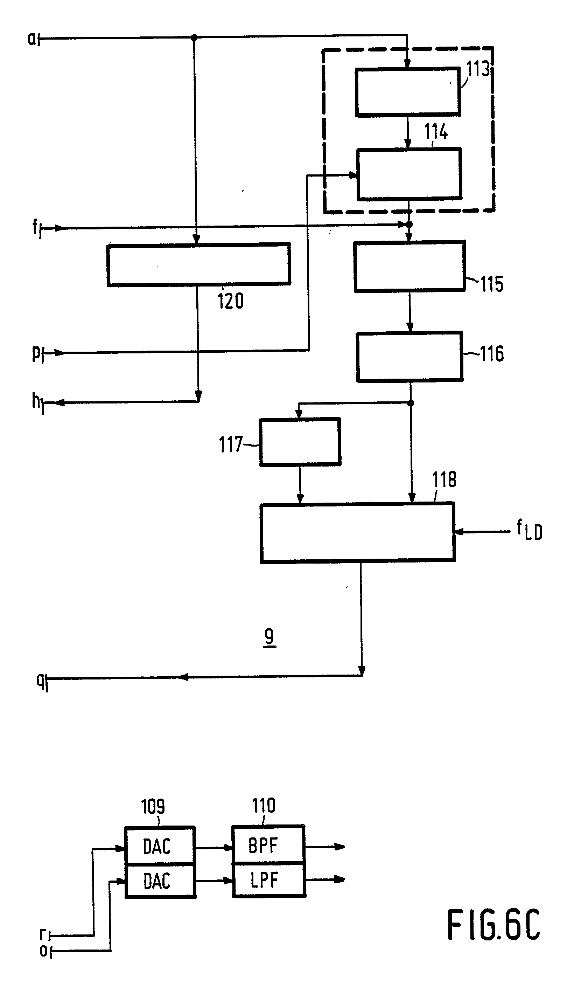

Referring now to Figure 6, there is shown a detailed block diagram of an HDNTSC encoder for generating each of the augmentation signal components, as well as a main signal component for transmitting over a main channel and an augmentation channel.

The encoder of Figure 6 is capable of reducing RGB 525 progressive line television signals into the required augmentation and main channel signals, as well as generating the main channel and augmentation signal from an HD-MAC-60 signal source. An HD-MAC-60 digital interface 46 is shown which, when connected to a standard satellite link, will convert the HD-MAC signal components into the augmentation and main channel components of the present invention. The two alternate sources are illustrated to demonstrate the capability of producing from either source the augmentation signal components in accordance with the present invention.

The RGB inputs from a standard 525 line progressive scan video camera are applied to a matrix 41. The standard Y, I and Q signals are produced which are applied to clamp circuits 42. Low pass filters 43 filter the clamped Y, I and Q signals to within a known baseband signal spectrum.

The encoder shown in Figure 6 will process the video signals in a digital format and then convert them to analog signal levels prior to transmission over the augmentation channel or the main channel. It is to be remembered that the digital implementation shown is not exclusive of other compatible analog techniques. The digital processing, however, lends itself to large scale integration techniques and are therefore considered preferred.

Three analog to digital converting circuits 44 convert the Y, I and Q signal levels into digital equivalents.

The encoder of Figure 6 employs the basic signal paths 8, 9 and 10 as was described with respect to Figure 3. The signal path 8 provides the NTSC centre main component, which is compatible with present low definition television receivers. The panels are provided to increase the aspect ratio of standard NTSC video signal.

The main channel signal processing circuit 8 is shown which includes two vertical low pass filters 50 and 51. These filters will remove the high frequency component of the Q and I digital signals, restricting the bandwidth of these signals to a frequency bandwidth of 6 MHz. Two vertical decimation circuits 52 and 53 decimate by a ratio of 2: 1 the Q and I line signals produced by the analog to digital converters 44. The decimation sequence is established by a vertical sequence controller 48 to which a composite sync signal is applied. The decimated signals are applied to horizontal low pass filters 56, 57 having a bandwidth of approximately 4 and 1.65 MHz, respectively, for the Q and I chrominance signal components. The HD-MAC-60 interface 46, if used as a source of high definition video signals, would have the corresponding outputs connected at this point.

The main centre NTSC compatible video signal and the associated panels for the video aspect ratio high definition signal are derived in centre and panels separator 61. Separator 61 will, under control of the pan and scan pointers, create the centre and panel images in accordance with instructions from a camera operator. With the HD-MAC-60 interface 46, these signals are created by the original video source and applied to the digital data sync and sound encoder 55, to which the composite sync signal, pan and scan pointers and left and right audio signals are applied.

The centre main NTSC signal is applied via its luminance Y and chrominance Q and I signals to time expanders 63, 64 and 65. The expanders will expand these video signal components to a conventional line width. The I and Q signals are combined together in centre precomb 76 and an NTSC compatible signal is provided by combining a subcarrier modulating the I and Q signals in quadrature, located at the standard 3.58 MHz and provided by centre NTSC modulator 78 with the luminance signal provided from expander 65. Horizontal and blanking signal components, as well as colour-burst and the VITS signal are added by the insertion circuit 80 to form the main channel.

The panels are formed from expanders 67, 68 and 69. Panel fading circuitry 71, 72 and 73 is provided to permit a smooth transiton from a panel to the main signal component.

Each of the regenerated panels is prefiltered in panels precomb 75 and then applied to a conventional NTSC modulation circuit 79. Here, the I and Q components for the panels are quadrature modulated on a subcarrier at 3.58 MHz, as well as combined with the luminance for the panels.

Additionally, a VITS signal is inserted in insertion circuit 81 along with the digital stereophonic sound packet. The training signal is used to decode the appropriate stitch points as well as provide other calibration and clamp levels. VITS signals are added to both the panel signal vertical interval and the main NTSC vertical input. These VITS signals provide various calibration signals such as a reference phase for any subcarrier regeneration circuit used in the HD decoder.

Each of the panel signals are applied to a line delay 98 and multiplexer 99. This will provide for left and right panels of alternate lines to be applied to multiplexer 99. Multiplexer 99 is gated to insert the alternate panel signals in the time frame associated with Figure 4. The resulting panels are modulated on the selected subcarrier in modulation circuit 100 to centre the left and right panels at 15.75 MHz as is shown in Figure 5.

Thus, the standard NTSC main channel has been shown, along with the panels for insertion in the augmentation super line time frame.

The other components of the augmentation signal super line time are assembled in the adaptive delays 96. This will permit each of the components for the augmentation signal to be accurately located in the time slot dedicated for the signal component.

The signal path 10 provides for the high frequency luminance and chrominance enhancement components for extending the bandwidth of the television signal. Vertical low pass filters 83 and 84 receive the Ih and Qh signals from the camera. Of course, where an HC-MAC-60 source 46 is used, these outputs are already provided. The vertical low pass filters for the chrominance signal are selected to have some suppression above 240 TVL vertically. Vertical decimation in a ratio of 4:1 is accomplished in decimating circuits 85 and 86. The decimation scheme is under control of the vertical sequence controller 48. At each frame, a new beginning line for the decimation process may be selected so that after four frames have occurred, every line number for the four frames has been passed to the horizontal high pass filters 88 and 89. Other decimation schemes are possible.

A horizontal high pass filter 87 is also provided for the high frequency luminance component Yh. A two dimen sional frequency band stop filter 120 is provided having the suppressing luma diagonals and general bandwidth characteristics shown in Figure 1. The horizontal bandwidth for high pass filter 87 is selected to be from 11.2 MHz to the cutoff frequency of 16.8 MHz.

The high frequency luminance component is vertically decimated by a ratio of 4:1 in decimation circuit 90. Time compression in circuits 92 and 93 compress the I and Q decimated components to the required time budget of Figure 4. Adaptive delays are provided in 96 to insert the resulting high frequency enhancement luminance and chrominance in its appropriate time slot.

The signal path 9 representing line differential signal components comprises a vertical high pass filter 113 connected to a vertical 2:1 decimation circuit 114. The vertical decimation circuit 114 is connected with the vertical sequence controller 48 to provide for a new decimation line for each frame, so that after two frames, each line number has been passed. The horizontal low pass filter 115 is selected to cut off frequencies which lie substantially above 3.7 MHz. A 3:4 time expansion circuit 116 will expand the LD information to the required dedicated time slot of Figure 3. A line delay 117 will provide each consecutive decimated line differential signal to the input of line differential quadrature modulator 118. The quadrature modulator 118 has a subcarrier frequency $f_{LD}$ selected to be 14 MHz.

The output of the line differential signal path 9, which is formed by the output of the quadrature modulator 118, is applied to the adaptive delay 96.

The adaptive delay 96 will arrange each of the received components of LD, Yh, Qh and panels in the appropriate time slot of the augmentation signal super line. A packetizer 101 completes the line construction. Additionally, the VITS training signal and a clamp signal are provided. Fading between time intervals is provided by the packet fader 106.

Digital to analog converter 109 and filter 110 create the required analog voltage, constituting the augmentation channel and the main channel. The main channel may be a conventional NTSC standard transmission channel. The augmentation channel may be a second unused NTSC standard channel. In any event, these signals can be modulated onto any broadcast carrier at the selection of those skilled in the art.

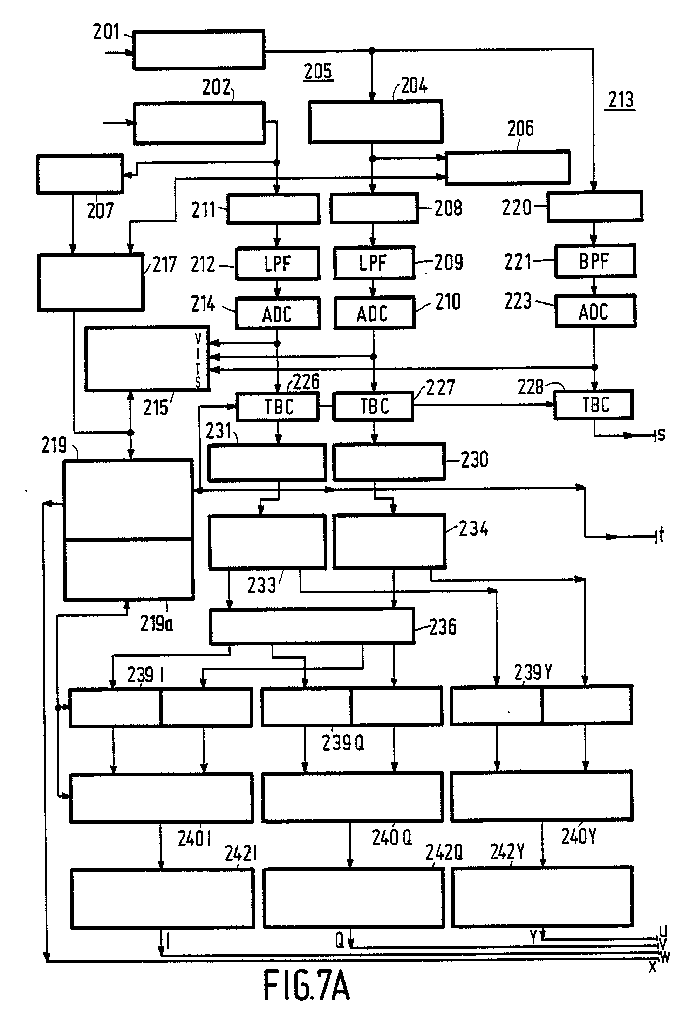

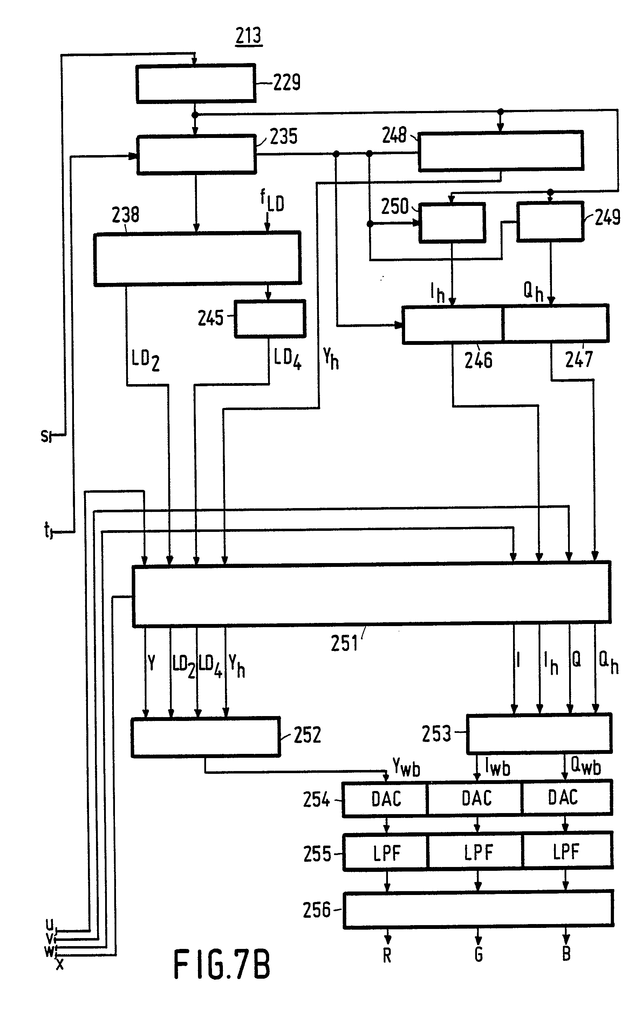

Figure 7 illustrates a decoder block diagram useful for constructing a high definition, wide aspect ratio signal from the signal components transmitted by the encoder of Figure 6. An augmentation channel input is shown connected to a demodulator 201. It is assumed that the augmentation channel and main channel have been conveyed by for example cable means or standard channels of the television spectrum to the decoding circuitry. The demodulator 201 will remove the augmentation baseband signal from whatever carrier may have been utilized to transmit the augmentation channel signal. The demodulated signal is applied to two signal paths 205 and 213. Signal path 205 will process the NTSC panels and digital audio, while signal path 213 will process the enhanced luminance and chrominance Yh, Ih and Qh signal information and quadrature LD information. The main channel is applied to a vestigial sideband demodulator 202, and it is processed to derive the NTSC compatible signal, as well as the panel signals needed to create the wide aspect ratio image.

Turning first to the main channel signal processing, the modulator 202 will create the baseband main channel signal from the VSB-AM signal on a channel carrier. A sync stripper 207 is shown which will remove any synchronization information which may have been placed on the main channel signal to assist NTSC conventional receivers in demodulating and displaying the NTSC compatible main channel signal.

Timing is provided by a PLL timing generator 217 which is synchronized with the horizontal synchronization information which was inserted on the main channel signal. The timing generator will provide a line time scan to the microprocessor system 215 and to the horizontal and vertical sequence controller 219. In conjunction with the VITS, this can establish an accurate phase reference.

A clamping circuit 211 will clamp the input analog NTSC compatible main channel signal to a reference DC level. Low pass filter 212 will suitably limit the spectrum of the baseband signal. As was true with the encoder circuit, digital processing is the preferred, but not only, technique for processing this information. An analog to digital converter (ADC) 214 will provide a digital signal from low pass filter 212. In a like way, the signal path 205 comprises a VSB modulator 204, a clamping circuit 208, a low pass filter (LPF) 209 and an anlog to digital converter 210 for processing the NTSC panels.

As was evident from the description of the encoder, various vertical interval test signals (VITS) are sent during the vertical blanking interval of the NTSC main signal during the panel vertical interval of the augmentation signal. During these intervals, the ADC output circuits 210 and 214 will apply the vertical interval test signal to the microprocessor system 215. Additionally, the VITS data contained in the augmentation signal super line is supplied from ADC 223 to the microrpocessor system 215.

The vertical interval test signals are used to establish gain and DC levels, as well as phase references for a chroma demodulator 236 for the standard NTSC signal, and a line differential quadrature demodulator 238. The VITS signals will provide the required phase reference for each of these demodulating circuits. Additionally, the microprocessor system 215 will decode the data transmitted during each augmentation signal super line and provide for synchronization between timing control (TBC) circuits 226, 227 and 228. The synchronization data will permit more accurate synchronization of the incoming video signal than standard NTSC video synchronization. These control circuits comprise memories which will receive the data from the analog to digital converters and time with respect to each other so that they are processed in synchronism.

Each of the signals which are timed by TBC circuits 226, 227 and 228 are further gain corrected by gain corrector circuits 229, 230 and 231. These gain correctors are set for an amplitude level corresponding to a decoded VITS signal sent during the vertical interval of the main channel NTSC signal and the augmentation signal.

Having thus time and gain corrected the NTSC compatible main signal, the Qh, Ih, Yh, LD signals, the NTSC main channel signal and panel signals may be luma/chroma separated and chroma demodulated. Adaptive comb filters 233 and 234 will separate the luminance and chroma signal portions for the centre and panels signals, respective ly. The chroma demodulator 236 will convert the chroma signal into I and Q component chrominance signals. Compression, as effected in compression circuits 239 Y/J/Q will restore the chroma and luminance to their previously unexpanded levels. The stitching of the panels to the centre signal is accomplished in stitching circuits 240 Y/J/Q, under control of the pan and scan data processor 219a. As is common with the previous 2 channel system, this stitching occurs in accordance with data sent as a data packet during the vertical blanking interval.

Vertical interpolation in circuits 242 Y/I/Q restores the full 480 active lines to the video frame, in both the luminance and chrominance components.

The enhanced luminance, chrominance components and quadrature LD are provided by signal path 213. A clamp circuit 220 restores a DC level for the received LD analog signal. A bandpass filter 221 will remove any received signal components not within 11 through 17 MHz bandwidth. The analog to digital converter (ADC) 223 will provide the corresponding digital signal for processing.

Once the derived high frequency enhancement signal has been time corrected in TBC 228 and gain corrected in gain corrected circuit 229, the line differential signal is separated in line differential quadrature demodulator 238. A 4:3 compressor 235, under control of the horizontal and vertical sequence controller 219, will restore the LD signal to its previous, unexpanded time limits. The restored line differential signal is quadrature demodulated in demodulator 238. Using the line delay 245, the first and second consecutive line differential signals, LD2 and LD4, are derived. Synchronization of the quadrature demodulator 238 with a VITS signal is effected by the microprocessor system 215.

The high frequency enhancement signal is restored in three vertical interpolators 248, 249 and 250. These interpolators are under the control of the horizontal and vertical sequence controller 219. Restoration occurs in a sequence which is established by the decimation sequence in the encoder. As there are three distinct components to be restored, i.e., high frequency luminance Yh, Ih and Qh chrominance, three vertical interpolators are shown.

Interpolation of decimated video frames is known in accordance with the MAC system. The restored frames are then time expanded in 1:3 expander 246 and 1:6 expander 247. Thus, high frequency .chroma, high frequency luminance is available for combination with the stitched NTSC video signal.

Each of the restored components, LD2, LD4, Yh, Ih, Qh and the main NTSC video signal components, I, Q and Y, are further compensated in component equalizing delays circuit 251 for any signal processing delays. It is necessary to align each of these components in time to fully restore the video picture frame.

The component equalized delays are applied to a luma combiner 252 and chroma combiner 253. The resulting luminance and chrominance components define a wide aspect ratio 525 line progressive scan video image for display. Conventional digital to analog converting circuits 254 and low pass filters 255 provide analog voltages of luminance and chrominance. A standard matrix 256 converts these chrominance and luminance components to an RGB signal.

Thus, there is described in detail a decoder circuit which will demodulate the line differential signals and restore the high frequency luminance and chrominance components such that they may be added with the previously known wide aspect ratio image information.

## Claims

1. A system for generating a high definition television augmentation line signal comprising:
a source of high definition television signals;
an encoder for producing sequential scanned lines of luminance and related chrominance signals from said high definition television signals;
a high pass filter means connected to receive said sequential scanned luminance signal, and related chrominance signals;
vertical decimation means connected to said high pass filter for selecting on a periodic basis one of a plurality of said scanned lines of luminance and related chrominance signals, whereby a high frequency enhancement signal is produced;
means for producing left and right panel signal information for increasing the aspect ratio of low definition video image from said high defnition television signals;
means for producing a decimated line differential signal from said lines of related luminance signals, and modulating said line differential signal on a subcarrier; and
means for sequentially combining in a time frame of a fixed duration said modulated line differential signal, said left and right panel signal information and said high frequency enhancement signal, whereby an augmentation line signal is produced.

2. The system of Claim 1 wherein said decimated line differential signal is combined in quadrature with a previous decimated line differential signal and then modulated on said subcarrier.

3. The system of Claim 1 further comprising:
means for separating said high frequency enhancement signal into a luminance and first and second chrominance signal portions;
means for time compressing said first and second chrominance portions; and
means for inserting said enhancement signal luminance, and first and second time compressed chrominance portions in time distinct intervals of said time frame.

4. The system of Claim 1 further comprising means for time expanding said decimated line differential signal.

5. The system of Claim 1 wherein first and second panel signals are included in said time frame.

6. A system for improving the horizontal resolution of an HDTV television signal comprising:
a high pass filter for providing a high frequency enhancement signal from an HDTV television signal;
means for decimating said high frequency enhancement signal to produce a decimated enhancement signal;
means for separating said enhancement signal into luminance and chrominance signals; and means for transmitting said luminance and chrominance signals in a time frame of said HDTV television signal.

7. The system of Claim 6 further comprising means for time compressing said chrominance signals.

8. The system of Claim 6 further comprising:
means for producing consecutive line differential signals from said television signal;
means for decimating said consecutive line differential signals;
means for quadrature modulating said decimated line differential signals on a subcarrier; and
means for inserting said quadrature modulated signal in said time frame.

9. In a system for transmitting HDTV augmentation signals, wherein a time frame is generated representing lines of picture information, including left and right panel information, line differential information, high 36 frequency luminance information and high frequency chrominance information, a decoding apparatus comprising:
a demodulator circuit for separating said augmentation signal from a transmission carrier;
a vertical interpolator for creating vertical lines of high frequency luminance and high frequency chrominance from said time frame high frequency luminance and chrominance information;
means for demodulating line differential information contained in said time frame;
means for combining said high frequency interpolated luminance with said line differential signal to provide an enhanced luminance signal; and
means for combining said enhanced luminance signal with a standard NTSC luminance signal, and said enhanced chrominance signal with a standard NTSC chrominance signal, whereby an HDTV video signal is produced.

10. The decoding apparatus of Claim 9 further comprising means for time expanding said enhanced luminance and chrominance signal.

11. The decoding apparatus of Claim 9 wherein said means for demodulating comprises a quadrature demodulator connected to demodulate first and second line differential signals in said time frame.

EP 0 317 018 A2

**FIG.1**

**FIG.2**

EP 0 317 018 A2

FIG.3

2-Ⅸ-PHA 21411

FIG. 4

EP 0 317 018 A2

3-IX- PHA 21411

FIG.5

EP 0 317 018 A2

EP 0 317 018 A2

FIG.6A

FIG.6 B

FIG.6C

FIG.7A

FIG.7B